# EUROPÄISCHE PATENTSCHRIFT

(11) **EP 1 695 135 B1**
(45) Veröffentlichungstag und Bekanntmachung des Hinweises auf die Patenterteilung: **08.04.2009**
(21) Anmeldenummer: 04803970.5
(22) Anmeldetag: 16.12.2004
(51) Int. Cl.: G02B 27/22

(54) **ANZEIGEVORRICHTUNG MIT OPTISCHEM TIEFENEFFEKT**
DISPLAY DEVICE FEATURING AN OPTICAL DEPTH EFFECT
DISPOSITIF D'AFFICHAGE A EFFET DE PROFONDEUR OPTIQUE

(30) Priorität: 16.12.2003 DE 10359156
(43) Veröffentlichungstag der Anmeldung: 30.08.2006
(73) Patentinhaber: Schott AG, 55122 Mainz (DE)
(72) Erfinder: BIEBEL, Alexander, 64404 Bickenbach (DE); BALDUS, Andreas, 55270 Zornheim (DE)
(74) Vertreter: Herden, Andreas F.
(86) Internationale Anmeldenummer: PCT/EP2004/014357
(87) Internationale Veröffentlichungsnummer: WO 2005/059627

(56) Entgegenhaltungen:
- WO-A-03/075369
- US-A- 4 306 768
- US-A- 5 694 260
- US-B1- 6 262 441
- US-B1- 6 447 122

## Beschreibung

Die Erfindung betrifft allgemein eine Anzeigevorrichtung, insbesondere eine Anzeigevorrichtung, welche einen optischen Tiefeneffekt des angezeigten Inhalts aufweist.

Herkömmliche Anzeigeelemente zeigen ihre Information im allgemeinen zweidimensional auf einer Anzeigefläche an. Beispielsweise sind OLED-Anzeigeelemente (OLED="organische lichtemittierende Diode") bekannt, die eine strukturierte Leuchtfläche aufweisen und dem Betrachter ihre Information in Form von leuchtenden und nichtleuchtenden oder dunklen Bereichen vermitteln. Jedoch besteht allgemein ein Bedarf an weiteren technischen Möglichkeiten, um Information effektvoller und kreativer gestalten zu können. Eine solche Möglichkeit besteht beispielsweise darin, der angezeigten, an sich zweidimensionalen Information eine optische Tiefenwirkung und damit eine besondere optische Anmutung zu verleihen.

Aus der WO 03/075369 ist eine elektronische Anzeigevorrichtung mit einem Polymer-LED-Display bekannt, welche eine semitramsparende reflektierende Schicht aufweist. Allerdings wird durch Reflexion an der einzelnen Reflexionsschicht keine optische Tiefenwirkung erreicht.

Eine weitere Anordnung einer Auzeigevorrichtung ist aus US 4 306 768 bekannt.

Der Erfindung liegt die Aufgabe zugrunde, eine Anzeigevorrichtung bereitzustellen, bei welcher der angezeigten Information eine optische Tiefenwirkung verliehen wird.

Diese Aufgabe wird bereits in überraschend einfacher Weise durch ein Leuchtelement gemäß Anspruch 1 gelöst. Vorteilhafte Ausgestaltungen und Weiterbildungen sind Gegenstand der Unteransprüche.

Demgemäß umfaßt eine erfindungsgemäße Anzeigevorrichtung ein Leuchtelement und eine lateral strukturierte Leuchtfläche mit zumindest einem leuchtfähigen Bereich, sowie zumindest zwei zueinander beabstandete lichtreflektierende Schichten, beziehungsweise Reflexionsschichten, zwischen denen von der Leuchtfläche emittiertes Licht hin- und zurückreflektiert wird, wobei wenigstens eine der lichtreflektierenden Schichten in einem Abstand zum Leuchtelement angeordnet ist. Um Licht für die Anzeige aus der Anzeigevorrichtung auszukoppeln, ist außerdem zumindest eine der lichtreflektierende Schichten semitransparent.

In einer Alternative können auch beide lichtreflektierenden Schichten einen Abstand zum Leuchtelement aufweisen. Dann ist es auch von Vorteil, wenn beide Schichten semitransparent sind, um sowohl den Lichteintritt des Lichts vom Leuchtelement, als auch den betrachterseitigen Lichtaustritt zu ermöglichen.

Unter einer lichtreflektierenden Schicht wird im Sinne der Erfindung bevorzugt eine Schicht mit einer Reflektivität von zumindest 10%, besonders bevorzugt von zumindest 50% im sichtbaren Bereich verstanden. Insbesondere kann die semitransparente Schicht eine Reflektivität im Bereich von 10 % bis 90 % aufweisen.

Das im Betrieb der Anzeigevorrichtung vom Leuchtelement emittierte Licht wird zwischen den lichtreflektierenden Schichten hin- und herreflektiert, wobei bei jeder Reflexion an der semitransparenten lichtreflektierenden Schicht ein Teil des Lichts durch die Schicht auf der Betrachtungsseite nach außen gelangt und vom Betrachter erfasst werden kann. Wird die Leuchtfläche bei parallelen lichtreflektierenden Schichten unter einem nicht senkrechten Winkel betrachtet, so erscheinen dann verschieden oft reflektierte Abbilder der leuchtenden Strukturen der lateral strukturierten Leuchtfläche in verschiedenen Tiefen unterhalb des direkt durch die semitransparente Schicht zum Betrachter gelangten Bildes. Auf diese Weise wird eine scheinbare Tiefenwirkung oder ein dreidimensionaler Eindruck der leuchtenden Strukturen der Leuchtfläche erreicht.

Hierbei wird der virtuelle Abstand der reflektierten Abbilder und damit deren Tiefeneindruck durch den Abstand der reflektierenden Schichten bestimmt. Der Abstand der Schichten wird dementsprechend vorzugsweise jeweils abhängig von der Anwendung und dem zu erzielenden Tiefeneffekt, auch abhängig von der Größe der Strukturen der Leuchtfläche gewählt. Typischerweise ist der Abstand der Schichten vorzugsweise zumindest 100 Mikrometer, bevorzugt zumindest 500 Mikrometer, besonders bevorzugt zumindest 1 Millimeter.

Eine alternative Anordnung zweier zueinander beabstandeter lichtreflektierender Schichten lässt sich in einfacher Weise durch ein transparentes Substrat realisieren, welches zwei lichtreflektierende Schichten auf gegenüberliegenden Seiten aufweist, wobei das Substrat mit einer dieser Seiten zur Leuchtfläche der Anzeigevorrichtung in Gegenüberstellung oder parallel zur Leuchtfläche angeordnet ist. Insbesondere kann das Substrat mit einer der Seiten mit lichtreflektierender Schicht auf das Leuchtelement oder ein Substrat, welches das Leuchtelement trägt, aufgesetzt sein. Bevorzugte Materialien für das Substrat sind Keramiken, Glaskeramiken, Glas, glasartige Stoffe oder Kunststoffe.

Falls mindestens eine der lichtreflektierenden Schichten verschiebbar relativ zur anderen Schicht angeordnet wird, lässt sich durch Variation des Abstands der beiden lichtreflektierenden Schichten zueinander die Tiefenwirkung verändern und je nach Formgebung dieser Schicht frei gestalten.

Eine derartige Anordnung von mindestens zwei variabel zueinander beabstandeter lichtreflektierender Schichten lässt sich in einfacher Weise durch eine lichtreflektierende Schicht realisieren, die auf einem transparenten und verschiebbar oder positionierbar zu einer ersten lichtreflektierenden Schicht angeordneten Trägersubstrat aufgebracht ist. Das Trägersubstrat kann zum Beispiel eine Polymerfolie, eine Glasscheibe oder eine Glasfolie umfassen.

Eine Ausführungsform der Erfindung sieht vor, daß zumindest eine der reflektierenden Schichten eine Interferenz-Reflexionsschicht umfasst. Eine solche Schicht umfaßt im allgemeinen mehrere aufeinanderfolgenden Lagen mit einem von Lage zu Lage zwischen zwei Werten wechselnden Brechungsindex, beziehungsweise, mit einander abwechselnden hoch- und niedrigbrechenden Schichten. Geeignet sind dazu beispielsweise Lagen, die abwechselnd Niob-, Tantal- oder Titanoxid für hochbrechende Schichten bzw. Aluminium-, Hafnium- oder Siliziumoxid oder Magnesiumfluorid für niedrigbrechende Schichten enthalten. Weitere geeignete Beschichtungsmaterialien für Interferenzschichten sind dem Fachmann bekannt.

Derartige Interferenz-Reflexionsschichten sind vergleichsweise alterungsunempfindlich und können als semitransparente Schichten auf den vom Leuchtelement emittierten Wellenlängenbereich abgestimmt werden.

Zumindest eine der reflektierenden Schichten kann aber auch eine metallische Reflexionsschicht umfassen. Solche Reflexionsschichten sind besonders einfach herstellbar, da nur eine einzelne metallische Lage aufgebracht werden muß.

Erfindungsgemäß umfasst das Leuchtelement eine OLED.

OLEDs können ohne weiteres sehr flach und großflächig hergestellt werden. Auch lassen sich auf einfache Weise lateral strukturierte Leuchtflächen realisieren.

OLEDs können außerdem bereits mit sehr guten internen Quanteneffizienzen (Anzahl Photonen pro injiziertes Elektron) hergestellt werden. So sind bereits OLED-Schichtstrukturen mit internen Quanteneffizienzen von 85% bekannt.

OLEDs sind vereinfacht im allgemeinen aus zwei Elektrodenschichten mit unterschiedlicher Austrittsarbeit aufgebaut, zwischen denen eine aktive Schicht mit organischem elektrolumineszentem Material angeordnet ist. Eine der Elektrodenschichten ist außerdem zumindest teilweise transparent, um einen Austritt des in der aktiven Schicht erzeugten Lichts zu ermöglichen. Bevorzugt werden zur Bildung der teilweise transparenten Elektrode transparente leitfähige Metalloxide (TCO: transparent conductive oxides), insbesondere Indium-Zinn-Oxid (ITO), oder dünne halbtransparente Metallschichten oder Kombinationen hiervon eingesetzt.

OLEDs als Leuchtelemente bieten sich auch dadurch an, daß im allgemeinen eine der Elektrodenschichten, zwischen denen die aktive Schicht angeordnet ist, lichtreflektierend ist. Eine solche Elektrodenschicht der OLED bildet gemäß der Erfindung gleichzeitig eine der lichtreflektierenden Schichten der erfindungsgemäßen Anzeigevorrichtung.

Auch die teilweise transparente Elektrode kann durch geeignete Maßnahmen in ihrem Reflexionsvermögen so ausgebildet sein, dass sie gemäß einer Ausführungsform der Erfindung gleichzeitig eine der lichtreflektierenden Schichten der erfindungsgemäßen Anzeigevorrichtung bildet. Dazu kann beispielsweise vorgesehen sein, daß eine Elektrodenschicht der OLED eine Lage mit transparentem leitfähigen Oxid (TCO), insbesondere mit Indium-Zinn-Oxid und eine semitransparente dünne Metallschicht umfasst und eine der lichtreflektierenden Schichten bildet. Hierbei ist das spektrale Reflexionsverhalten der Schichtkombination dieser Elektrodenschicht im wesentlichen durch die Wahl des Metalls und der jeweiligen Schichtdicken von Metall- und TCO-Schicht bestimmt. Besonders geeignet sind Edelmetalle, insbesondere Platin oder Gold, die mit Austrittsarbeiten größer 4 eV an die Potenzialanforderungen der OLED-Schichten hinreichend angepasst sind. Doppellagige Elektrodenschichten für eine OLED mit einer transparenten leitfähigen Oxidschicht und einer Metallschicht sind auch aus der US 6,262,441 B1 und der EP 966 050 bekannt. Selbstverständlich kann eine derartige mehrlagige Elektrodenschicht der OLED aber auch eingesetzt werden, ohne eine der lichtreflektierenden Schichten der erfindungsgemäßen Anzeigevorrichtung zu bilden.

Eine OLED mit strukturierter Leuchtfläche kann beispielsweise eine zwischen den zwei Elektrodenschichten des OLED-Leuchtelements angeordnete, lateral strukturierte Isolationsschicht aufweisen, die zumindest einen Bereich einer der Elektrodenschichten bedeckt. Auf diese Weise wird der Stromfluß in einem von der Isolationsschicht bedeckten Bereich unterbrochen, so daß die Leuchtfläche in diesem Bereich dunkel bleibt. Entsprechend leuchtet die Leuchtfläche bei an den Elektrodenschichten angelegter Spannung in einem nicht bedeckten Bereich, da hier der Stromfluß nicht behindert wird.

Zur Begrenzung des Stromflusses und damit der Lichtemission auf lokale Bereiche der Leuchtfläche kann auch mindestens eine der Elektrodenschichten lateral strukturiert-sein. Dazu kann diese Schicht beispielsweise mittels Schattenmaskentechniken in Vakuumbeschichtungsprozessen direkt strukturiert abgeschieden, oder als durchgehende Schicht abgeschieden und nachträglich, z.B. über Ätzprozesse, strukturiert werden.

Eine weitere Möglichkeit, eine strukturierte Leuchtfläche zu schaffen, besteht darin, Teile des vom Leuchtelement emittierten Lichtes bereichsweise auszublenden. Dazu kann die Anzeigevorrichtung beispielsweise eine lateral strukturierte Maske aufweisen. Ebenfalls sind Kombinationen dieser Strukturierungsverfahren und Maßnahmen zur Schaffung einer strukturierten Leuchtfläche realisierbar.

Gemäß einer weiteren Ausführungsform der Erfindung sind die lichtreflektierenden Schichten parallel zueinander angeordnet. Hier tritt der scheinbare optische Tiefeneffekt insbesondere dann auf, wenn der Betrachter schräg auf die Leuchtfläche schaut. Der Tiefeneindruck der Anordnung kann über einen variablen Abstand der lichtreflektierenden Schichten einstellbar gemacht werden.

Es ist aber auch möglich, die lichtreflektierenden Schichten schräg zueinander anzuordnen. Hier wird der optische Tiefeneffekt auch sichtbar, wenn der Betrachter senkrecht auf die Leuchtfläche schaut. Zusätzlich sind die einzelnen Reflexbilder zueinander um einen festen Winkel, der sich aus der Schräge der lichtreflektierenden Schichten ergibt, verkippt, was eine Krümmung des opt. Tiefeneffekts bewirkt.

Weitere optische Effekte lassen sich auch beispielsweise dadurch erreichen, daß zumindest eine der lichtreflektierenden Schichten gewölbt ist.

Im Strahlengang zwischen den Reflexionsschichten kann auch ein teilabsorbierendes, insbesondere ein farbiges Material angeordnet sein. Auf diese Weise kann der Farbeindruck beeinflusst werden, wobei sich bei geeigneter Wahl des Materials die Farbe des Lichts von Reflexion zu Reflexion allmählich ändert. Dadurch ergeben sich einzelne Reflexionsbilder, die sich in für den Betrachter scheinbar unterschiedlichen Höhen befinden und jeweils einen anderen Farbton besitzen.

Ein ähnlicher Effekt kann auch erzielt werden, indem die zumindest eine semitransparente lichtreflektierende Schicht im Wellenlängenbereich des vom Leuchtelement emittierten Lichts und/oder in Abhängigkeit des Auftreffwinkels einen spektral variierenden Transmissions- oder Reflexionsgrad aufweist.

Durch Hinzunahme weiterer semitransparenter reflektierender Schichten lässt sich der Tiefeneffekt verstärken und weiter modellieren. Dementsprechend kann die erfindungsgemäße Anzeigevorrichtung auch drei oder mehr zueinander beabstandete lichtreflektierende Schichten aufweisen.

Weiter ist es möglich bei einer derartigen Anordnung mit drei oder mehr lichtreflektierenden Schichten zwei oder mehr dieser Schichten parallel, schräg oder gekrümmt zueinander anzuordnen, was der Tiefeneindruck verstärkt oder moduliert. Außerdem können die Schichten unterschiedliche Transmissions- oder Reflexionsgrade aufweisen.

In einer bevorzugten einfachen Weiterbildung einer Ausführungsform mit drei oder mehr lichtreflektierenden Schichten kann mindestens ein zusätzliches Substrat mit mindestens einer semitransparenten Reflexionsbeschichtung, beziehungsweise einer semitransparenten lichtreflektierenden Schicht auf die Basisausführungsform der Erfindung mit zwei lichtreflektierenden Schichten aufgebracht werden.

Eine erfindungsgemäße Anzeigevorrichtung kann in vielfältiger Weise eingesetzt werden. Gedacht ist beispielsweise eine Verwendung einer solchen Anzeigevorrichtung als Informationsanzeigeeinrichtung eines
- Kraftfahrzeugs, oder
- einer Telekommunikationseinrichtung wie beispielsweise einem Mobiltelefon, oder
- eines haustechnischen Gerätes, wie insbesondere eines "white good"-Gerätes, zum Beispiel einem Küchengerät oder eines "brown good"-Gerätes (haustechnisches Gerät außerhalb des Küchenbereichs, wie z.B. für Heizung, Strom-, Gas-Wasserversorgung), oder
- eines Spielzeugs, oder
- einer Reklame- Signal- oder Hinweistafel, oder
- eines Emblems oder Logos.

Die Erfindung wird nachfolgend anhand beispielhafter Ausführungsformen und unter Bezugnahme auf die beigefügten Zeichnungen näher erläutert. Dabei verweisen gleiche Bezugszeichen auf gleiche oder ähnliche Teile.

Es zeigen:
- Fig. 1: eine erste Ausführungsform,
- Fig. 2: eine Skizze des Strahlengangs von Licht für die in Fig. 1 gezeigte Ausführungsform,
- Fig. 3A und 3B: weitere Ausführungsformen der Erfindung, bei welchen eine der Elektrodenschichten der OLED eine der lichtreflektierenden Schichten bildet,
- Fig. 4A und 4B: Varianten der in Fig. 1 dargestellten Ausführungsform,
- Fig. 5: eine Ausführungsform mit schräg zueinander angeordneten lichtreflektierenden Schichten,
- Fig. 6: ein Ausführungsbeispiel einer Anzeigevorrichtung mit einer gewölbten lichtreflektierenden Schicht,
- Fig. 7: eine Ausführungsform mit drei lichtreflektierenden Schichten, und
- Fig. 8: eine Ausführungsform mit variabel einstellbarem Abstand zwischen den lichtreflektierenden Schichten.

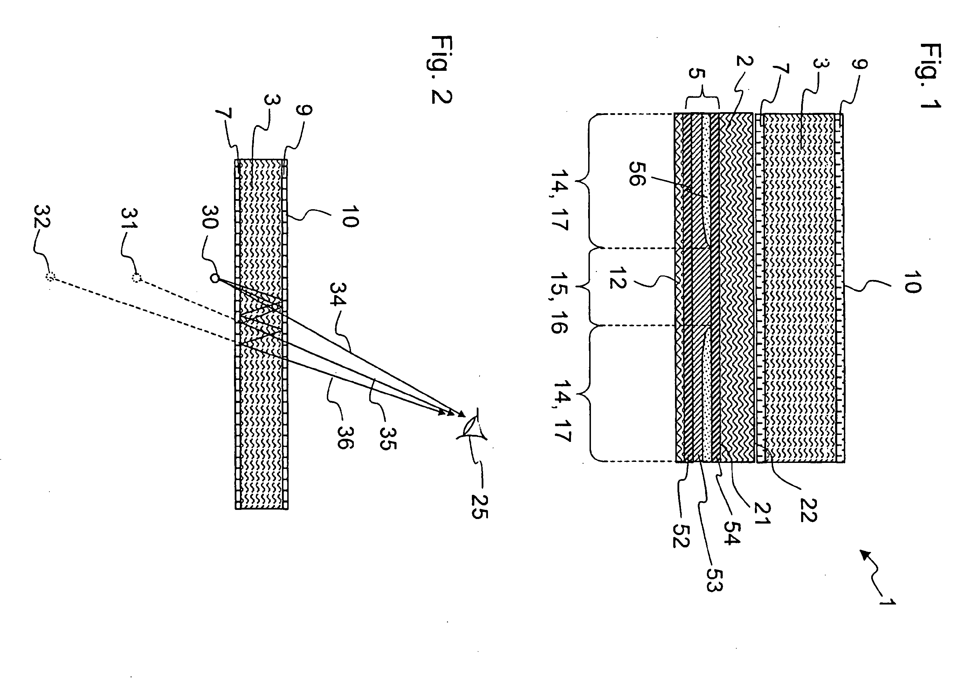

In Fig. 1 ist eine schematische Schnittansicht durch eine erste Ausführungsform einer als Ganzes mit dem Bezugszeichen 1 bezeichneten Anzeigevorrichtung dargestellt.

Die Anzeigevorrichtung 1 weist als Leuchtelement eine als Ganzes mit 5 bezeichnete OLED in Form einer Schichtstruktur oder Schichtabfolge auf. Die Schichtstruktur der OLED 5 ist auf einer Seite 21 eines transparenten Substrats 2 aufgebracht, welches als Träger für die OLED 5 dient.

Die Schichten 52 und 54 sind Elektrodenschichten zur Spannungsversorgung der zwischen diesen Schichten angeordneten elektrolumineszenten Schicht 53. Die mit dem Substrat 2 in Kontakt stehende Elektrodenschicht 54 ist dabei als lichtdurchlässige Elektrodenschicht ausgeführt, so daß Licht, welches von der elektrolumineszenten Schicht 53 emittiert wird, durch die Elektrodenschicht 54 in das transparente Substrat 2 gelangen kann. Als Materialen für die Elektrodenschicht 54 bieten sich insbesondere transparente leitfähige Oxide (TCO), wie z.B. Indium-Zinn-Oxid (ITO) oder ein anderes leitfähiges und zumindest teilweise transparentes Material an, z.B. dünne, hinreichend transparente Metallschichten.

Aufgrund einer Austrittsarbeitsdifferenz zwischen den Elektrodenschichten 52 und 54 werden Elektronen bei richtiger Polung der an die Schichten 52 und 54 angelegten Spannung an der als Kathode wirkenden Schicht in unbesetzte elektronische Zustände des organischen, elektrolumineszenten Materials injiziert. Gleichzeitig werden von der als Anode wirkenden Schicht mit niedrigerer Austrittsarbeit Defektelektronen oder Löcher injiziert, wodurch im organischen Material durch Rekombination der Elektronen mit den Defektelektronen Lichtquanten emittiert werden.

Der Aufbau, die Zusammensetzung und die Abfolge der OLED-Schichten ist dem Fachmann bekannt. Für die Erfindung kann selbstverständlich jede aus dem Stand der Technik bekannte OLED-Schichtstruktur verwendet werden.

Als elektrolumineszente Schichten können beispielsweise Schichten verwendet werden, die MEH-PPV ((Poly(2-Methoxy, 5-(2'-Ethyl-Hexyloxy) Paraphenylen Vinylen) oder auch Alq₃ (Tris-(8-Hydroxyquinolino)-Aluminium) als organisches, elektrolumineszentes Material aufweisen. Mittlerweile sind eine Vielzahl geeigneter elektrolumineszenter Materialien, wie beispielsweise metall-organische Komplexe, insbesondere Triplett-Emitter oder Lanthanid-Komplexe bekannt. Derartige Schichten und Materialien, sowie verschiedene mögliche Schichtabfolgen innerhalb von organischen, elektrooptischen Elementen wie insbesondere von OLEDs sind beispielsweise in folgenden Dokumenten, sowie den Literaturverweisen darin beschrieben, welche durch Bezugnahme diesbezüglich vollständig in die vorliegende Anmeldung mit aufgenommen werden:
1. Nature, Vol. 405, Seiten 661 - 664,
2. Adv. Mater. 2000, 12, No. 4, Seiten 265 - 269,
3. EP 0573549,
4. US 6107452.

Bessere Quantenausbeuten lassen sich mit einer OLED außerdem erzielen, wenn neben der aktiven elektrolumineszenten Schicht 53 noch weitere funktionale Schichten zwischen den Elektrodenschichten 52, 54 angeordnet werden. Als weitere funktionale Schichten können beispielsweise zusätzlich mindestens eine Potentialanpassungsschicht, eine Elektronenblockierschicht, eine Lochblockierschicht, und/oder eine Elektronleiterschicht, eine Lochleiterschicht, und/oder eine Elektronen- und/oder Lochinjektionsschicht in der OLED 5 zwischen den beiden Schichten 52, 54 vorhanden sein. Die Funktion, Anordnung und Zusammensetzung dieser Funktionalschichten sind dabei aus der Fachliteratur bekannt.

Um eine strukturierte Leuchtfläche der OLED 5, beziehungsweise der Anzeigevorrichtung 1 zu schaffen, ist außerdem zwischen den beiden Elektrodenschichten 52, 54 eine lateral strukturierte Isolationsschicht 56 angeordnet. Diese Isolationsschicht bedeckt Bereiche 14 der Elektrodenschicht 54, wobei ein oder mehrere andere Bereiche 15 frei bleiben. Durch das Vorhandensein der Isolationsschicht auf den bedeckten Bereichen wird dort der Stromfluß zwischen den Elektrodenschichten unterbrochen. Dementsprechend findet ein Stromfluß und damit eine Elektrolumineszenz der aktiven Schicht 53 nur entlang der Bereiche 15 statt. Diese Bereiche bilden leuchtende Bereiche 16 der Leuchtfläche, während die bedeckten Bereiche 14 nicht leuchtende Bereiche 17 der Leuchtfläche darstellen. Damit wird eine für den Betrachter lateral strukturierte Leuchtfläche der OLED 5 geschaffen. Die Leuchtfläche verläuft bei dieser Ausführungsform der Erfindung für den Betrachter parallel zur Betrachtungsseite 10 entlang der aktiven elektrolumineszenten Schicht 53 der OLED 5.

Damit die Schichten der OLED 5 vor Umgebungseinflüssen geschützt sind, ist außerdem auf der OLED 5 eine Abdeckung 12 aufgebracht. Die Abdeckung 12 kann beispielsweise eine Glasabdeckung in Form einer aufgesetzten Glasplatte und/oder eine Aufdampfglasschicht umfassen. Allgemein ist Glas sehr gut für die Verkapselung von OLEDs geeignet, da es eine besonders hohe Sperrwirkung gegen reaktive Atmosphärenbestandteile wie Sauerstoff und Wasser aufweist und so einer Degradation der OLED-Schichten entgegenwirkt. Weitere Möglichkeiten der Abdeckung bzw. der Kapselung sind dem Fachmann bekannt.

Ein weiteres transparentes Substrat 3 dient als Träger für zwei lichtreflektierende Schichten 7, 9 die auf gegenüberliegenden Seiten des Substrats 3 beabstandet zueinander aufgebracht und in einem Abstand zum Leuchtelement, hier der OLED 5, angeordnet sind. Wie anhand von Fig. 1 zu erkennen ist, sind die Seiten des Substrats und damit auch die beiden semitransparenten lichtreflektierenden Schichten bei dieser Ausführungsform außerdem parallel zueinander angeordnet.

Das Substrat 3 ist mit der Seite mit der lichtreflektierenden Schicht 7 auf das Substrat mit der OLED 5 und in Gegenüberstellung mit der Leuchtfläche der OLED 5 aufgesetzt, so daß die andere lichtreflektierende Schicht 9 auf der Betrachterseite 10 der Anzeigevorrichtung 1 angeordnet ist. Eine andere Möglichkeit, um zwei lichtreflektierende Schichten beabstandet zueinander anzuordnen, besteht alternativ zu der in Fig. 1 gezeigten Ausführungsform darin, die Schicht 7 auf das Substrat 2 aufzubringen, wobei das Substrat 3 dann nur eine lichtreflektierende Schicht 9 aufweist.

Beide lichtreflektierenden Schichten 7, 9 sind bei der in Fig. 1 dargestellten Ausführungsform einer Anzeigevorrichtung 1 semitransparent für das von der OLED 5 emittierte Licht. Derartige semitransparente lichtreflektierende Schichten können beispielsweise Interferenz-Reflexionsschichten umfassen. Eine Interferenz-Reflexionsschicht kann beispielsweise eine Abfolge von Aluminiumoxid-, Hafniumoxid-, Siliziumoxid- oder Magnesiumfluorid-haltigen niederbrechenden und Niob-, Tantal- oder Titanoxid-haltigen hochbrechenden Lagen mit unterschiedlichen Brechungsindizes umfassen. Als breitbandig semitransparente Reflexionsschicht hat sich eine Schicht mit 20 bis 40 einzelnen Lagen erwiesen, aber auch schon geringere Schichtlagenzahlen sind zur Erzeugung des optischen Effekts ausreichend.

Derartige Interferenzschichten können auch in einfacher Weise durch mehrfaches Tauchbeschichten in geeigneten Tauchbädern hergestellt werden. Weitere bevorzugte Herstellungstechniken sind Vakuumbeschichtung (PVD) wie thermisches Verdampfen oder Sputtern (Aufstäuben), chemische Abscheidungsprozesse aus der Gasphase (CVD), wie thermisch-, plasma- (PECVD) oder Mikrowellenpuls-induzierte (PICVD) Schichtausbildung.

Es können aber auch sehr dünne metallische Reflexionsschichten eingesetzt werden, die für das Licht aufgrund ihrer geringen Dicke noch teilweise transparent sind.

Der optische Effekt, der sich für den Betrachter durch diese Anordnung ergibt, ist genauer anhand von Fig. 2 erläutert. In Fig. 2 ist nochmals das Substrat 3 mit den beiden semitransparenten, lichtreflektierenden Schichten 7, 9 dargestellt. Zusätzlich ist ein Emissionspunkt 30 der elektrolumineszenten Schicht 53 dargestellt. Die weiteren Bestandteile der Anzeigevorrichtung sind zum Zwecke der Übersichtlichkeit nicht dargestellt.

Vom Emissionspunkt ausgehend sind beispielhaft drei unter unterschiedlichen Winkeln ausgehende Lichtstrahlen dargestellt, welche das Auge eines Betrachters erreichen. Der Lichtstrahl 34 durchquert dabei das transparente Substrat 3 mit den Semitransparenten Schichten 7, 9 ohne Reflexion und trifft das Auge des Betrachters. Der Lichtstrahl 35 wird einmal an den beiden lichtreflektierenden Schichten 7, 9 hin- und herreflektiert, bevor er aus der Anzeigevorrichtung austritt. Der Lichtstrahl 36 schließlich wird zwischen den lichtreflektierenden Schichten 7, 9 zweimal hin- und herreflektiert.

Anhand der Lichtstrahlen 35 und 36 wird ersichtlich, daß die Anordnung mit den beiden beabstandet zueinander angeordneten lichtreflektierenden Schichten 7, 9 es ermöglicht, daß unter verschiedenen Winkeln vom Emissionspunkt 30 ausgehende Lichtstrahlen das Betrachterauge 25 erreichen können. Für den Betrachter erscheint aber ein zwischen den lichtreflektierenden Schichten reflektierter Lichtstrahl, der unter einem anderen Winkel als ein direkt transmittierter Strahl das Auge 25 erreicht, von einem virtuellen Emissionspunkt auszugehen, der in einer nicht mit der Leuchtfläche zusammenfallenden Ebene angeordnet ist. Genauer gesagt scheinen bei der in Fig. 1 oder 2 gezeigten Anordnung die virtuellen Emissionspunkte für den Betrachter unterhalb des reellen Emissionspunktes 30 zu liegen. Die virtuellen Emissionspunkte für die Lichtstrahlen 35 und 36 sind dabei mit 31, beziehungsweise 32 bezeichnet. Damit dieser Effekt für den Betrachter zutage tritt, ist es günstig, wenn er unter schrägem Winkel auf die Leuchtfläche der Anzeigevorrichtung 1 blickt.

Es ist außerdem anhand von Fig. 2 ersichtlich, daß nur bestimmte, diskrete Emissionswinkel von Lichtstrahlen jeweils einen Strahlengang ermöglichen, welcher das Auge in seiner momentanen Position trifft. Daher erscheinen die virtuellen Emissionspunkte, beziehungsweise virtuelle Abbilder der Leuchtfläche für den Betrachter in diskreten Abständen unterhalb der Leuchtfläche mit dem reellen Emissionspunkt 30. Die Position der virtuellen Abbilder der Leuchtfläche ist insbesondere auch vom Abstand der Reflexionsschichten 7, 9 zueinander abhängig. Größere Abstände der Reflexionsschichten 7, 9 führen auch zu größeren scheinbaren vertikalen Abständen der virtuellen Abbilder untereinander und zum reellen Bild der Leuchtfläche.

Bei der obigen Betrachtung und in Fig. 2 ist allerdings die Brechung der Lichtstrahlen an den Grenzflächen verschiedener Medien, insbesondere beim Austritt eines Lichtstrahls aus dem Substrat 3 nicht berücksichtigt. Die Brechung wirkt sich unter anderem auf die Position der virtuellen Emissionspunkte 31, 32 und damit der Position der virtuellen Abbilder der Leuchtfläche aus.

Weist zumindest eine der semitransparenten lichtreflektierenden Schichten im Wellenlängenbereich des vom Leuchtelement emittierten Lichts außerdem einen spektral variierenden Transmissionsgrad auf, so kann ein zusätzlicher ästhetischer Farbeffekt erzielt werden, da sich die spektrale Verteilung des zum Betrachter gelangenden Lichts in Abhängigkeit der Anzahl von Reflexionen zwischen den lichtreflektierenden Schichten ändert. Mit jeder Reflexion wird dabei auch ein gewisser Anteil der Lichtintensität transmittiert, wobei durch die spektral selektive Transmission auch die spektrale Verteilung des reflektierten Strahls beeinflusst wird.

Auch kann zumindest eine der semitransparenten lichtreflektierenden Schichten 7, 9 einen in Abhängigkeit des Auftreffwinkels eines Lichtstrahls spektral variierenden Transmissionsgrad aufweisen. Dies kann beispielsweise mit einer Interferenz-Reflexionsschicht realisiert werden. Da jedem der virtuellen Emissionspunkte ein bestimmter diskreter Reflexionswinkel zuzuordnen ist, weist bei einer solchen Weiterbildung der Erfindung auch das Licht jedes der virtuellen Emissionspunkte eine andere spektrale Verteilung auf. Damit erscheinen die virtuellen Abbilder der Leuchtfläche und das reelle Bild der Leuchtfläche in einem jeweils anderen Farbton. Da mit der Anzahl der Reflexionen zwischen den Schichten auch die optische Weglänge ändert, kann ein ähnlicher Effekt auch dadurch erzielt werden, daß zwischen den Reflexionsschichten 7, 9 ein teilabsorbierendes, insbesondere ein farbiges Material angeordnet ist. Beispielsweise kann dazu ein geeignet gefärbtes Substrat 3 eingesetzt werden.

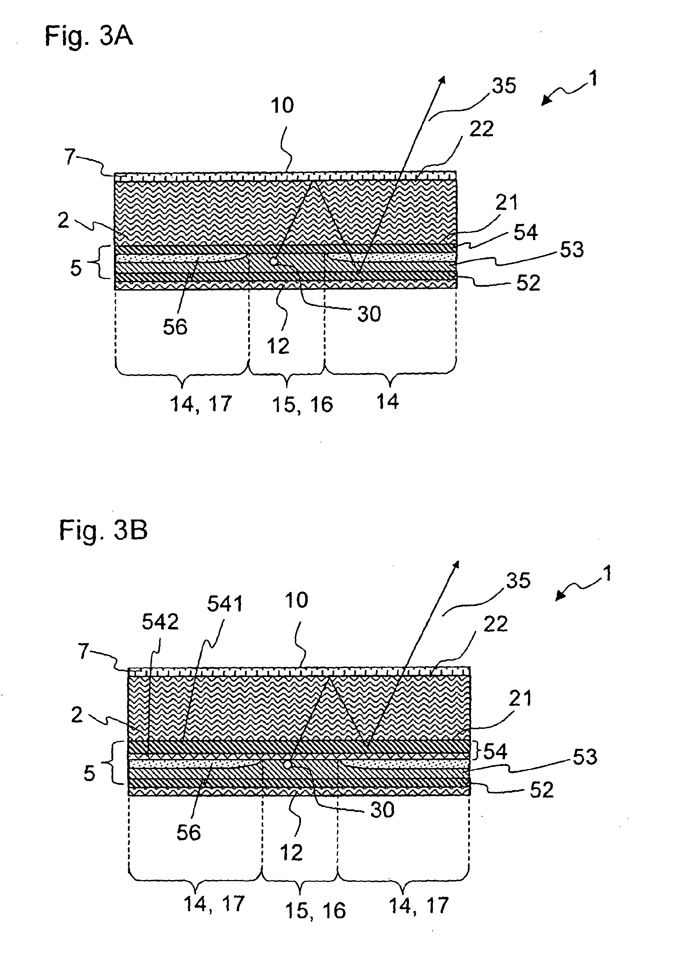

Fig. 3A zeigt eine Ausführungsform einer erfindungsgemäßen Anzeigevorrichtung 1. Bei dieser Ausführungsform der Erfindung bildet die Elektrodenschicht 52 der OLED 5 selbst eine der lichtreflektierenden Schichten, wobei die lichtreflektierende Schicht 7 in einem Abstand zum Leuchtelement 5 angeordnet ist. Auf das Substrat 2, welches die OLED 5 trägt, ist direkt eine semitransparente Schicht 7 aufgebracht. Der Strahlengang ist dem in Fig. 2 sehr ähnlich. Allerdings befindet sich bei dem in Fig. 3A gezeigten Ausführungsbeispiel der Emissionspunkt 30 in der elektrolumineszenten Schicht 53 nicht außerhalb, sondern zwischen den lichtreflektierenden Schichten 7 und 53. Ein Strahlengang 35 eines einfach hin- und herreflektierten Lichtstrahls ist zur Verdeutlichung eingezeichnet.

Die in Fig. 3A gezeigte Ausführungsform ist einfach zu realisieren, da bei einem üblichen Aufbau einer OLED 5 die Elektrodenschicht 52 im allgemeinen metallisch und damit auch lichtreflektierend ist. Geeignet als Material für eine solche metallische Elektrodenschicht ist beispielsweise Aluminium oder Calcium. Außerdem können die übrigen Schichten der OLED sehr dünn und/oder transparent gehalten sein, so daß eine zusätzliche Lichtabsorption zwischen den reflektierenden Schichten 7 und 52 hinreichend klein ist.

Fig. 3B zeigt eine weitere Ausführungsform der Erfindung, bei welcher eine der Elektrodenschichten eine der lichtreflektierenden Schichten bildet. Im Unterschied zur Ausführungsform der Fig. 3A bildet hier aber die transparente Elektrodenschicht 54 die lichtreflektierende Schicht. Dazu umfasst die Elektrodenschicht 54 hier zwei Lagen 541 und 542. Die Lage 541 ist eine TCO-Schicht, insbesondere mit Indium-Zinn-Oxid. Die Lage 542 umfaßt eine dünne Metallschicht und weist eine Schichtdicke auf, die geeignet ist, als semitransparente, lichtreflektierende Schicht zu dienen, so daß das Licht der OLED 5 zwischen dieser Lage 542 der Schicht 54 und semitransparenten Schicht 7 teilweise hin- und herreflektiert werden kann.

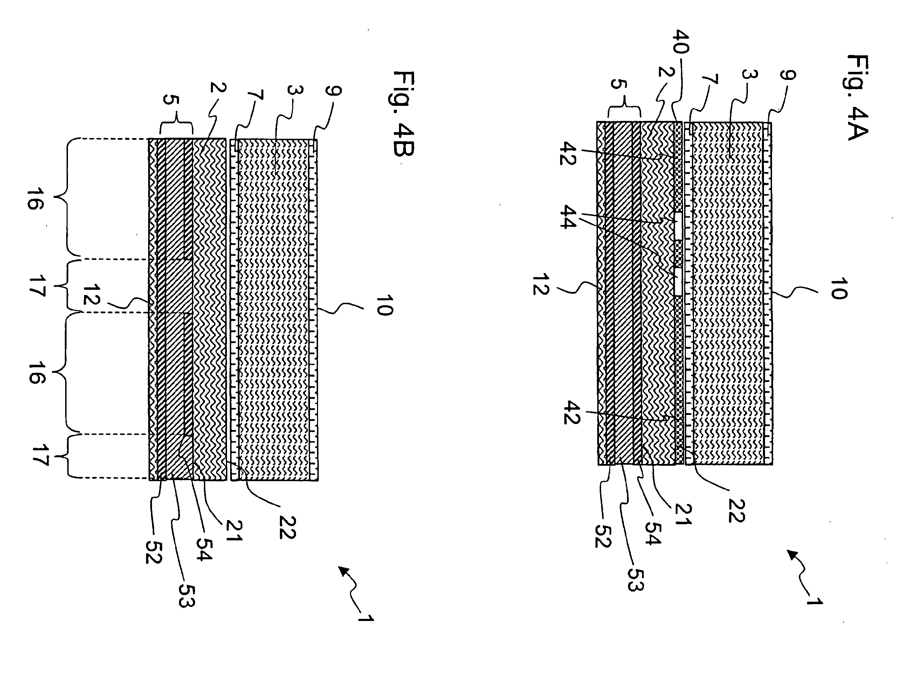

Fig. 4A zeigt eine Variante der in Fig. 1 gezeigten Anzeigevorrichtung. Bei dem in Fig. 4A gezeigten Ausführungsbeispiel wird eine strukturierte Leuchtfläche der Anzeigevorrichtung 1 dadurch geschaffen, daß das vom OLED-Leuchtelement 5 in der elektrolumineszenten Schicht 53 erzeugte Licht teilweise ausgeblendet wird. Dazu weist die Anzeigevorrichtung 1 zusätzlich eine Maske 40 mit lichtabsorbierenden oder opaken Bereichen 42 und transparenten Breichen 44 auf. Die Maske bildet dabei dann die strukturierte Leuchtfläche der Anzeigevorrichtung 1. Anstelle der transparenten Bereiche 44 kann die Maske 40 selbstverständlich auch Aussparungen aufweisen.

Fig. 4B zeigt eine weitere Variante der in Fig. 1 dargestellten Anzeigevorrichtung. Bei der in Fig. 4B gezeigten Ausführungsform wird eine strukturierte Leuchtfläche der OLED 5 dadurch geschaffen, daß eine der Elektrodenschichten lateral strukturiert ist. Bei der in Fig. 4B gezeigten Ausführungsform ist beispielhaft die transparente Elektrodenschicht 54 strukturiert. Anstelle dessen kann aber auch die Elektrodenschicht 54 entsprechend strukturiert sein. Die Strukturierung ist derart, daß die Schicht 52 an nicht leuchtenden Bereichen 17 der Leuchtfläche unterbrochen, beziehungsweise entfernt ist, während sie an leuchtenden Bereichen 16 vorhanden ist.

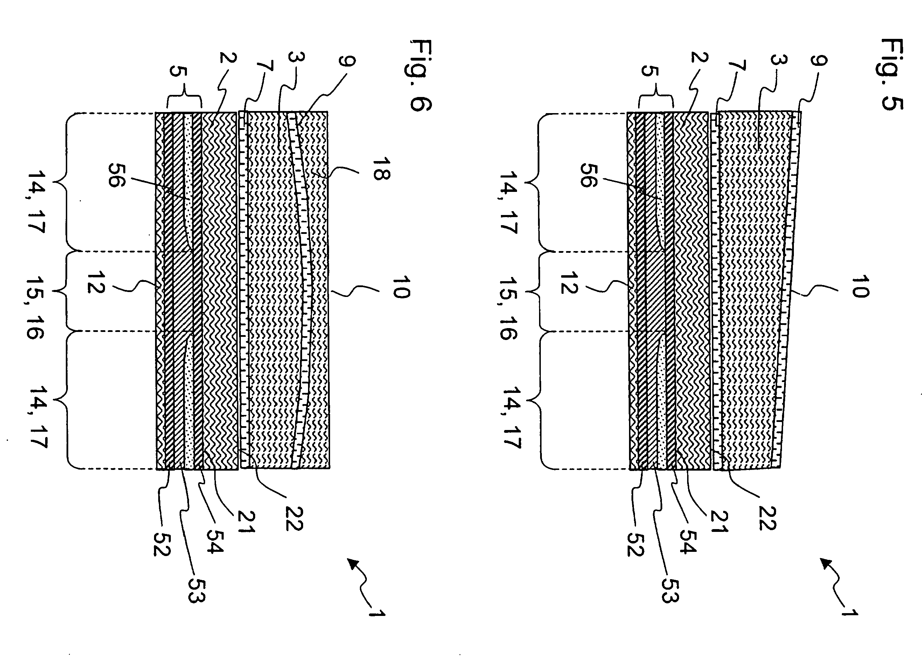

Das in Fig. 5 gezeigte Ausführungsbeispiel entspricht in seinem Aufbau weitgehend dem in Fig. 1 dargestellten Ausführungsbeispiel. Im Unterschied zu Fig. 1 sind die Seiten des Substrats 3 mit den lichtreflektierenden Schichten 7, 9 und damit auch die lichtreflektierenden Schichten 7, 9 selbst aber nicht planparallel, sondern schräg zueinander angeordnet. Auf diese Weise wird der anhand von Fig. 2 erläuterte optische Tiefeneffekt auch bei senkrechter Aufsicht auf die Leuchtfläche der Anzeigevorrichtung 1 sichtbar. Außerdem ändert sich durch die schräge Anordnung der Abstand der lichtreflektierenden Schichten 7, 9 entlang der Betrachtungsseite 10. Damit wird ein zusätzlicher optischer Effekt erreicht, bei welchem die virtuellen Abbilder der Strukturen der Leuchtfläche nicht parallel zueinander, sondern jeweils in einem Winkel zu den benachbarten Abbildern angeordnet sind und somit die Serie der Bilder "gebogen" erscheint.

Fig. 6 zeigt noch eine weitere Variante der in Fig. 1 gezeigten Ausführungsform einer Anzeigevorrichtung 1. Bei dieser Variante ist die Seite des Substrats 3 mit der lichtreflektierenden Schicht 9 und damit auch die Schicht 9 selbst gewölbt. Beispielhaft ist dabei diese Seite des Substrats 9 konvex ausgeführt. Bei dieser Anordnung werden die virtuellen Abbilder der Leuchtfläche durch die Reflexion an der wie ein Hohlspiegel wirkenden konkaven Innenseite der lichtreflektierenden Schicht 9 vergrößert.

Ebenso können auch beide lichtreflektierenden Schichten 7, 9 gewölbt sein und/oder die Wölbung eine andere Form, wie etwa eine konkave, eine Wellenform oder eine beliebige Freiform aufweisen.

Um eine ebene Lichtaustrittsfläche zu schaffen, ist die nach außen weisende lichtreflektierende Schicht 9 außerdem mit einer transparenten Abdeckung 18 versehen. Die Abdeckung erfüllt noch eine weitere Funktion, indem sie die lichtreflektierende Schicht 9 gegen äußere Einwirkungen, wie beispielsweise gegen mechanische Beschädigung schützt. Eine solche Abdeckung kann daher auch für die anderen, anhand der Fig. 1 bis 5 gezeigten Ausführungsbeispiele zweckmäßig sein. Die Abdeckung kann zum Beispiel durch Beschichten mit einem transparenten Kunststoff oder einer transparenten Antikratzbeschichtung, Bekleben mit einer Folie oder durch Aufbringen eines weiteren transparenten Substrats hergestellt werden.

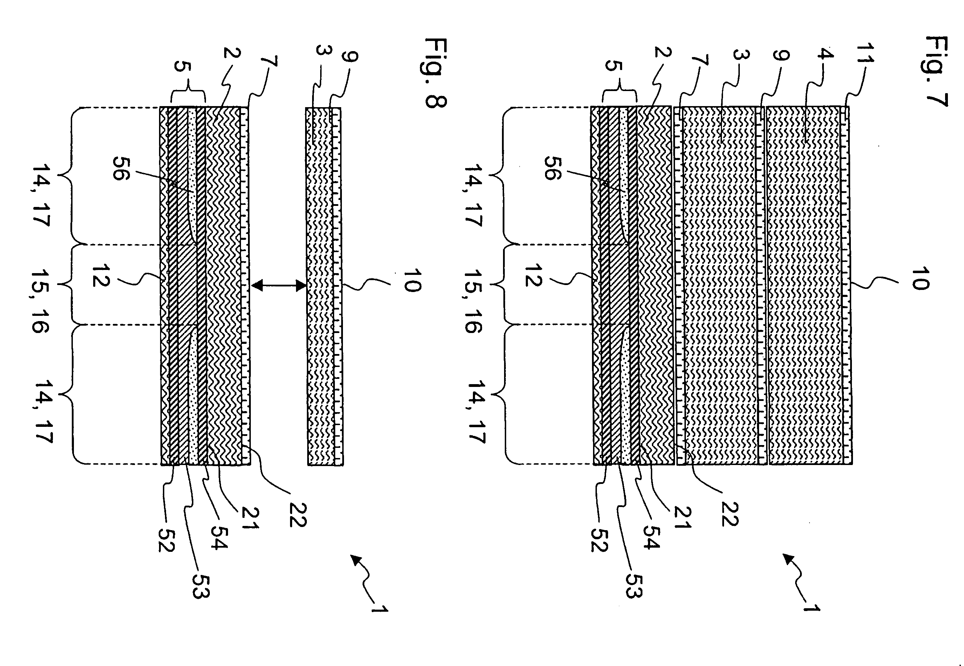

Fig. 7 zeigt noch eine weitere Ausführungsform. Im Unterschied zu den oben beschriebenen Ausführungsformen weist die in Fig. 7 dargestellte Anzeigevorrichtung 1 drei zueinander beabstandete lichtreflektierende Schichten 7, 9 und 11 auf. Diese Anzeigevorrichtung ist ähnlich wie die in Fig. 1 gezeigte Ausführungsform aufgebaut, wobei ein zusätzliche Substrat 4 mit einer nach außen weisenden lichtreflektierenden Schicht 11 vorgesehen ist, welches auf das Substrat 3 mit den beiden anderen lichtreflektierenden Schichten 7 und 9 aufgesetzt ist. Der Abstand zwischen den Schichten ergibt sich jeweils durch die Dicke der Substrate 3, beziehungsweise 4. Selbstverständlich können auch noch weitere entsprechend aufgebaute Substrate aufgesetzt werden, so daß die Anzeigevorrichtung mehr als drei lichtreflektierende Schichten umfasst.

In Fig. 8 ist eine weitere Abwandlung der in Fig. 1 dargestellten Ausführungsform einer Anzeigevorrichtung 1 gezeigt. Bei dieser Ausführungsform ist die semitransparente lichtreflektierende Schicht 7 auf dem Substrat 2 für die OLED 5 aufgebracht. Eine zweite lichtreflektierende Schicht 9 befindet sich auf einem weiteren transparenten Substrat 3, welches, wie anhand des Doppelpfeils angedeutet, verschiebbar oder positionierbar relativ zum Substrat 2 mit der OLED und damit auch zur ersten lichtreflektierenden Schicht 7 angeordnet ist. Um einen derartigen Aufbau zu realisieren, kann eine geeignete Einrichtung vorgesehen sein, welche das Substrat 3 verschiebbar zum Substrat 2 haltert.

Bis auf die anhand der Fig. 3A und 3B erläuterten Ausführungsformen erfindungsgemäßer Leuchtelemente, bei welchen eine der lichtreflektierenden Schichten ein Bestandteil des Leuchtelementes sind, sind jeweils zwei oder mehr lichtreflektierende Schichten in einem Abstand zur OLED 5 als Leuchtelement angeordnet. Diese Ausführungsformen sind insbesondere dann vorteilhaft, wenn auch bei dünnen Schichtdicken der OLED noch eine nicht vernachlässigbare Absorption in einer Funktionalschicht der OLED, wie insbesondere der elektrolumineszenten Schicht auftritt, und die Mehrfachreflexionen abschwächt. Dieser Effekt wird auch bei einer Ausführungsform, wie sie Fig. 3B zeigt, vermieden, bei welcher die lichtreflektierende Schicht auf der Lichtaustrittsseite der OLED 5 angeordnet ist, so daß ein an dieser Schicht reflektierter Strahl nicht erneut durch die weiteren Funktionalschichten der OLED 5 hindurchtritt.

Die Erfindung wird durch die angefügten Ansprüche definiert.

### Bezugszeichenliste

- 1: Anzeigevorrichtung
- 2: Substrat für OLED 5
- 3, 4: Substrat für lichtreflektierende Schichten 7, 9, 11
- 5: OLED
- 7, 9, 11: lichtreflektierende Schichten
- 10: Betrachtungsseite von 1
- 12: Verkapselungsglas
- 14: von 56 bedeckter Bereich
- 15: von 56 nicht bedeckter Bereich
- 16: leuchtender Bereich der Leuchtfläche
- 17: nicht leuchtender Bereich der Leuchtfläche
- 18: Abdeckung von 9
- 21: erste Seite von 2
- 22: zweite Seite von 2
- 25: Betrachterauge
- 30: Emissionspunkt in 53
- 31, 32: virtuelle Emissionspunkte
- 34, 35, 36: Lichtstrahlen
- 40: Maske
- 42: lichtabsorbierender Bereich von 40
- 44: transparenter Bereich von 40
- 52: Elektrodenschicht von 5
- 53: elektrolumineszente Schicht von 5
- 54: transparente Elektrodenschicht von 5
- 56: strukturierte Isolationsschicht von 5
- 541: Leitfähige Oxidschicht von 54
- 542: semitransparente Metallschicht von 54

## Patentansprüche

1. Anzeigevorrichtung (1) mit einem Leuchtelement und einer lateral strukturierten Leuchtfläche (16, 17) mit nicht leuchbenden Bereichen (17) und zumindest einem leuchtfähigen Bereich (16), wobei das Leuchtelement eine OLED (5) umfasst, sowie ein transparentes Substrats (3), welches zwei lichtreflektierende Schichten (7, 52, 54) auf gegenüberliegenden Seiten aufweist, wobei das Substrat (3) mit einer dieser Seiten in Gegenüberstellung zur Leuchtfläche der Anzeigevorrichtung (1) angeordnet ist, wobei eine Elektrodenschicht (52, 54) der OLED (5) eine der lichtreflektierenden Schichten bildet wobei zwischen den zueinander beabstandeten lichtreflektierenden Schichten (7, 52, 54), von der Leuchtfläche emittiertes Licht zur Erzeugung eines optischen Tiefeneffecktes hin- und zurückreflektiert wird, wobei zumindest eine der lichtreflektierende Schichten (7, 52, 54) semitransparent ist, und wobei wenigstens eine der lichtreflektierenden Schichten in einem Abstand zum Leuchtelement angeordnet ist.

2. Anzeigevorrichtung gemäß Anspruch 1, **dadurch gekennzeichnet, daß** zumindest eine der reflektierenden Schichten (7) eine Interferenz-Reflexionsschicht umfasst.

3. Anzeigevorrichtung gemäß Anspruch 2, **dadurch gekennzeichnet, daß** die Interferenz-Reflexionsschicht abwechselnde hoch- und niedrigbrechende Lagen umfasst, wobei die hochbrechenden Lagen Niob-, Tantal- oder Titanoxid und die niedrigbrechenden Lagen Aluminium-, Hafnium- oder Siliziumoxid oder Magnesiumfluorid aufweisen.

4. Anzeigevorrichtung gemäß einem der vorstehenden Ansprüche, **dadurch gekennzeichnet, daß** zumindest eine der reflektierenden Schichten (7) eine metallische Reflexionsschicht umfasst.

5. Anzeigevorrichtung gemäß einem der vorstehenden Ansprüche, **dadurch gekennzeichnet, daß** wenigstens eine der lichtreflektierenden Schichten eine Tauch- oder Schleuder-, Sputter-, PVD-, CVD-, PECVD- oder PICVD-Beschichtung umfasst.

6. Anzeigevorrichtung gemäß einem der vorstehenden Ansprüche, **dadurch gekennzeichnet, daß** eine Elektrodenschicht der OLED (5) eine Lage mit transparentem leitfähigen Oxid (TCO), insbesondere mit Indium-Zinn-Oxid und eine semitransparente dünne Metallschicht umfasst und eine der lichtreflektierenden Schichten (7, 9) bildet.

7. Anzeigevorrichtung gemäß einem der vorstehenden Ansprüche, **dadurch gekennzeichnet, daß** zwischen zwei Elektrodenschichten der OLED (5) eine lateral strukturierte Isolationsschicht (56) angeordnet ist, die zumindest einen Bereich (14) einer der Elektrodenschichten (52, 54) bedeckt.

8. Anzeigevorrichtung gemäß einem der vorstehenden Ansprüche, **dadurch gekennzeichnet, daß** zumindest eine der Elektrodenschichten (53, 54) der OLED (5) lateral strukturiert ist.

9. Anzeigevorrichtung gemäß einem der vorstehenden Ansprüche, **dadurch gekennzeichnet, daß** die Anzeigevorrichtung eine lateral strukturierte Maske (40) aufweist.

10. Anzeigevorrichtung gemäß einem der vorstehenden Ansprüche, **dadurch gekennzeichnet, daß** die lichtreflektierenden Schichten (7, 52, 54) parallel zueinander angeordnet sind.

11. Anzeigevorrichtung gemäß einem Ansprüche 1 bis 10, **dadurch gekennzeichnet, daß** die lichtreflektierenden Schichten (7, 52,54) schräg zueinander angeordnet sind.

12. Anzeigevorrichtung gemäß einem der vorstehenden Ansprüche, **dadurch gekennzeichnet, daß** zumindest eine der lichtreflektierenden Schichten (7) gewölbt ist.

13. Anzeigevorrichtung gemäß einem der vorstehenden Ansprüche, **dadurch gekennzeichnet, daß** im Strahlengang zwischen den Reflexionsschichten (7, 52, 54) ein teilabsorbierendes, insbesondere ein farbiges Material angeordnet ist.

14. Anzeigevorrichtung gemäß einem der vorstehenden Ansprüche, **dadurch gekennzeichnet, daß** die zumindest eine semitransparente lichtreflektierende Schicht (7) im Wellenlängenbereich des vom Leuchtelement emittierten Lichts einen spektral variierenden Transmissionsgrad aufweiset.

15. Anzeigevorrichtung gemäß einem der vorstehenden Ansprüche, **dadurch gekennzeichnet, daß** die zumindest eine semitransparente lichtreflektierende Schicht (7) einen in Abhängigkeit des Auftreffwinkels spektral variierenden Transmissionsgrad aufweist.

16. Anzeigevorrichtung gemäß einem der vorstehenden Ansprüche, **dadurch gekennzeichnet, daß** mindestens eine der lichtreflektierenden Schichten (7) verschiebbar relativ zur anderen lichtreflektierenden Schicht (9, 7) angeordnet ist.

17. Anzeigevorrichtung gemäß Anspruch 16, wobei eine lichtreflektierende Schicht auf einem transparenten und verschiebbar oder positionierbar zu einer ersten lichtreflektierenden Schicht angeordneten Substrat aufgebracht ist.

18. Anzeigevorrichtung gemäß einem der vorstehenden Ansprüche, **gekennzeichnet durch** drei oder mehr zueinander beabstandete lichtreflektierende Schichten (7, 9, 11).

19. Verwendung einer Anzeigevorrichtung gemäß einer der vorstehenden Ansprüche als Informationsanzeigeeinrichtung eines
- Kraftfahrzeugs, oder
- einer Telekommunikationseinrichtung, insbesondere eines Mobiltelefons, oder
- eines haustechnischen Gerätes, oder
- eines Spielzeugs, oder
- einer Reklame- Signal- oder Hinweistafel, oder
- eines Emblems oder Logos.

## Claims

1. Display device (1) having a luminous element and a laterally structured luminous surface (16, 17) with non-luminous regions and at least one region (16) able to luminesce, wherein the luminous element has an OLED (5), and a transparent substrate (3) which has two light-reflecting layers (7, 52, 54) on opposite sides, wherein the substrate (3) is disposed with one of these sides located opposite the luminous surface of the display device (1), wherein an electrode layer (52, 54) of the OLED (5) forms one of the light-reflecting layers, wherein between the mutually spaced light-reflecting layers (7, 52, 54) light emitted by the luminous surface is reflected back and forth in order to produce an optical depth effect, wherein at least one of the light-reflecting layers (7, 52, 54) is semi-transparent, and wherein at least one of the light-reflecting layers is disposed at a distance from the luminous element.

2. Display device as claimed in claim 1, **characterised in that** at least one of the reflecting layers (7) has an interference-reflection layer.

3. Display device as claimed in claim 2, **characterised in that** the interference-reflection layer has alternating high and low refractive index layers, wherein the high refractive index layers include niobium oxide, tantalum oxide or titanium oxide, and the low refractive index layers include aluminium oxide, hafnium oxide or silicon oxide or magnesium fluoride.

4. Display device as claimed in any one of the preceding claims, **characterised in that** at least one of the reflecting layers (7) includes a metal reflection layer.

5. Display device as claimed in any one of the preceding claims, **characterised in that** at least one of the light-reflecting layers includes a dip, spin, sputter, PVD, CVD, PECVD or PICVD coating.

6. Display device as claimed in any one of the preceding claims, **characterised in that** an electrode layer of the OLED (5) includes a layer with a transparent conductive oxide (TCO), in particular with indium-tin oxide and a semi-transparent thin metal layer and forms one of the light-reflecting layers (7. 9).

7. Display device as claimed in any one of the preceding claims, **characterised in that** between two electrode layers of the OLED (5) a laterally structured insulating layer (56) is disposed which covers at least a region (14) of one of the electrode layers (52, 54).

8. Display device as claimed in any one of the preceding claims, **characterised in that** at least one of the electrode layers (53, 54) of the OLED (5) is laterally structured.

9. Display device as claimed in any one of the preceding claims, **characterised in that** the display device has a laterally structured mask (40).

10. Display device as claimed in any one of the preceding claims, **characterised in that** the light-reflecting layers (7, 52, 54) are disposed in parallel with each other.

11. Display device as claimed in any one of claims 1 to 10, **characterised in that** the light-reflecting layers (7, 52, 54) are disposed inclined with respect to each other.

12. Display device as claimed in any one of the preceding claims, **characterised in that** at least one of the light-reflecting layers (7) is curved.

13. Display device as claimed in any one of the preceding claims, **characterised in that** in the beam path between the reflection layers (7, 52, 54) a partially absorbent, in particular a coloured material is disposed.

14. Display device as claimed in any one of the preceding claims, **characterised in that** the at least one semi-transparent light-reflecting layer (7) has a spectrally varying transmittance in the wavelength range of the light emitted by the luminous element.

15. Display device as claimed in any one of the preceding claims, **characterised in that** the at least one semi-transparent light-reflecting layer (7) has a transmittance which varies spectrally in dependence upon the angle of incidence.

16. Display device as claimed in any one of the preceding claims, **characterised in that** at least one of the light-reflecting layers (7) is disposed so as to be displaceable relative to the other light-reflecting layer (9, 7).

17. Display device as claimed in claim 16, wherein a light-reflecting layer is attached to a transparent substrate which is disposed so as to be displaceable or positionable with respect to a first light-reflecting layer.

18. Display device as claimed in any one of the preceding claims, **characterised by** three or more mutually spaced light-reflecting layers (7, 9, 11).

19. Use of a display device as claimed in any one of the preceding claims as an information display device of a
- motor vehicle, or
- a telecommunications device, in particular a mobile telephone, or
- a household appliance, or
- a toy, or
- an advertising, signalling or information display panel, or
- an emblem or logo.

## Revendications

1. Dispositif d'affichage (1) comprenant un élément lumineux et une surface lumineuse (16, 17) structurée de façon latérale avec des zones non lumineuses et au moins une zone (16) susceptible d'être éclairée, l'élément lumineux comprenant une OLED (5), et un substrat (3) transparent, lequel présente deux couches (7, 52, 54) réfléchissant la lumière sur des côtés opposés, le substrat (3) étant disposé avec l'un de ces côtés en vis-à-vis par rapport à la surface lumineuse du dispositif d'affichage (1), une couche d'électrode (52, 54) de l'OLED (5) formant l'une des couches réfléchissant la lumière, de la lumière émise par la surface lumineuse entre les couches sur les couches (7, 52, 54) réfléchissant la lumière et espacées les unes des autres étant réfléchie en faisant des aller et retour pour générer un effet de profondeur optique, au moins l'une des couches (7, 52, 54) réfléchissant la lumière étant semi-transparente, et au moins l'une des couches réfléchissant la lumière étant disposée à une certaine distance de l'élément lumineux.

2. Dispositif d'affichage selon la revendication 1, **caractérisé en ce qu'**au moins l'une des couches réfléchissantes (7) comporte une couche de réflexion à interférence.

3. Dispositif d'affichage selon la revendication 2, **caractérisé en ce que** la couche de réflexion à interférence comporte des couches alternatives à pouvoir réfringent élevé et à faible pouvoir réfringent, les couches à pouvoir réfringent élevé présentant de l'oxyde de niobium, de tantale ou de titane et les couches à faible pouvoir réfringent présentant de l'oxyde d'aluminium, de l'oxyde d'hafnium ou de l'oxyde de silicium ou du fluorure de magnésium.

4. Dispositif d'affichage selon l'une quelconque des revendications précédentes, **caractérisé en ce qu'**au moins l'une des couches réfléchissantes (7) comporte une couche de réflexion métallique.

5. Dispositif d'affichage selon l'une quelconque des revendications précédentes, **caractérisé en ce qu'**au moins l'une des couches réfléchissant la lumière comporte un revêtement au trempé ou un revêtement par projection, un revêtement par pulvérisation cathodique, un revêtement PVD, un revêtement CVD, un revêtement PECVD ou un revêtement PICVD.

6. Dispositif d'affichage selon l'une quelconque des revendications précédentes, **caractérisé en ce qu'**une couche d'électrode de l'OLED (5) comporte une couche avec de l'oxyde (TCO) conducteur transparent, en particulier avec de l'oxyde d'indium et d'étain et une couche métallique mince semi-transparente et forme l'une des couches (7, 9) réfléchissant la lumière.

7. Dispositif d'affichage selon l'une quelconque des revendications précédentes, **caractérisé en ce que** entre deux couches d'électrode de l'OLED (5) est disposée une couche d'isolation (56) structurée de façon latérale, qui couvre au moins une zone (14) de l'une des couches d'électrode (52, 54).

8. Dispositif d'affichage selon l'une quelconque des revendications précédentes, **caractérisé en ce qu'**au moins l'une des couches d'électrode (53, 54) de l'OLED (5) est structurée de façon latérale.

9. Dispositif d'affichage selon l'une quelconque des revendications précédentes, **caractérisé en ce que** le dispositif d'affichage présente un masque (40) structuré de façon latérale.

10. Dispositif d'affichage selon l'une quelconque des revendications précédentes, **caractérisé en ce que** les couches (7, 52, 54) réfléchissant la lumière sont disposées de façon parallèle entre elles.

11. Dispositif d'affichage selon l'une quelconque des revendications 1 à 10, **caractérisé en ce que** les couches (7, 52, 54) réfléchissant la lumière sont disposées en biais les unes par rapport aux autres.

12. Dispositif d'affichage selon l'une quelconque des revendications précédentes, **caractérisé en ce qu'**au moins l'une des couches (7) réfléchissant la lumière est courbée.

13. Dispositif d'affichage selon l'une quelconque des revendications précédentes, **caractérisé en ce qu'**un matériau à absorption partielle, en particulier un matériau coloré, est disposé dans la trajectoire de faisceau entre les couches de réflexion (7, 52, 54).

14. Dispositif d'affichage selon l'une quelconque des revendications précédentes, **caractérisé en ce que** l'au moins une couche (7) semi-transparente et réfléchissant la lumière présente un degré de transmission variant au plan spectral dans la plage de longueurs d'onde de la lumière émise par l'élément lumineux.

15. Dispositif d'affichage selon l'une quelconque des revendications précédentes, **caractérisé en ce que** l'au moins une couche (7) semi-transparente et réfléchissant la lumière présente un degré de transmission variant au plan spectral en fonction de l'angle d'incidence.

16. Dispositif d'affichage selon l'une quelconque des revendications précédentes, **caractérisé en ce qu'**au moins l'une des couches (7) réfléchissant la lumière est disposée de façon déplaçable par rapport à l'autre couche (9, 7) réfléchissant la lumière.

17. Dispositif d'affichage selon la revendication 16, une couche réfléchissant la lumière étant appliquée sur un substrat transparent et disposé de façon déplaçable ou positionnable par rapport à une première couche réfléchissant la lumière.

18. Dispositif d'affichage selon l'une quelconque des revendications précédentes, **caractérisé par** trois ou plus de trois couches (7, 9, 11) réfléchissant la lumière et espacées les unes des autres.

19. Utilisation d'un dispositif d'affichage selon l'une quelconque des revendications précédentes sous forme de dispositif d'affichage d'information
- d'un véhicule,
- ou d'un dispositif de télécommunication, en particulier d'un téléphone mobile,
- ou d'un appareil ménager,
- ou d'un jouet,
- ou d'un panneau de publicité ou d'un panneau de signalisation ou d'un panneau d'information,
- ou d'un emblème ou d'un logo.
